# EUROPÄISCHE PATENTSCHRIFT

(11) **EP 3 792 137 B1**
(45) Veröffentlichungstag und Bekanntmachung des Hinweises auf die Patenterteilung: **29.03.2023**
(21) Anmeldenummer: 19214247.9
(22) Anmeldetag: 06.12.2019
(51) Int. Cl.: B61G 9/06

(54) **EINRICHTUNG FÜR EINE HALTERUNG EINER ZUG- UND STOSSRICHTUNG EINER KUPPLUNG, INSBESONDERE EINES SCHIENENFAHRZEUGS**
DEVICE FOR FIXING A TRACTION AND PUSHING DIRECTION OF A COUPLING, ESPECIALLY A RAIL VEHICLE
DISPOSITIF POUR LE MAINTIEN D'UNE DIRECTION DE TRACTION ET DE POUSSÉE D'UN ACCOUPLEMENT, EN PARTICULIER D'UN VÉHICULE FERROVIAIRE

(30) Priorität: 12.09.2019 CH 11472019; 05.11.2019 CH 13972019
(43) Veröffentlichungstag der Anmeldung: 17.03.2021
(73) Patentinhaber: Faiveley Transport Schwab AG, 8207 Schaffhausen (CH)
(72) Erfinder: PLECKO, Marijan, 8200 Schaffhausen (CH); FAAS, Stefan, 9050 Appenzell (CH)
(74) Vertreter: Luchs, Willi

(56) Entgegenhaltungen:
- WO-A1-2005/075272
- DE-U1- 20 009 859
- US-A- 1 904 293
- US-A1- 2017 225 696
- US-A1- 2017 320 506

## Beschreibung

Die Erfindung betrifft eine Einrichtung für eine Halterung einer Zug- und Stossvorrichtung einer Kupplung insbesondere eines Schienenfahrzeugs nach dem Oberbegriff des Anspruchs 1.

Insbesondere bei Schienenfahrzeugen für Güterwagen ist die Zug- und Stossvorrichtung einer Kupplung einfach ausgelegt, bei der üblicherweise eine Überbrückungskonstruktion enthalten ist, welche vorderseitig mit einem eine Zugstange gelenkig lagernden separaten Stützelement verbunden und rückseitig in einer Fahrzeugausnehmung des Schienenfahrzeugs befestigbar ist. Diese Überbrückungskonstruktion besteht aus plattenförmigen Teilen und sie ist relativ aufwändig bei einer Montage der Zug- und Stossvorrichtung in dem Fahrzeugkasten.

Die Druckschrift US 2017/0225696 offenbart eine Lagerung einer Fahrzeugkupplung mit einer Stange und einem diese haltendes Verbindungselement und Tragelementen für die Ankoppelung an eine Rückseite einer Wandung eines Fahrzeugs. Diese Tragelemente können als Hohlzylinder mit einem runden oder rechteckigen Querschnitt und zusammen mit dem Verbindungselement und der Rückseite aus einem Gussstück gefertigt sein. Diese Lagerung ist an einer Wandung des Fahrzeugs und nicht in einer Fahrzeugausnehmung befestigt.

Bei der Entgegenhaltung US 2017/0320506 ist ein Gelenkkopf mit einer Stahlguss-Struktur offenbart, bei der eine Zugstange durch eine Schwenkachse angelenkt ist und diese Zugstange vorne eine Gelenkverbindung aufweist. Eine Federeinrichtung ist innerhalb des einen U-förmigen Träger mit einer Rückwand umfassenden Gelenkkopfs angeordnet. Dieser Träger ist weder sich in eine Ausnehmung erstreckend angeordnet noch rückseitig befestigt.

Der Erfindung liegt die Aufgabe zugrunde, eine Einrichtung für eine Halterung einer Zug- und Stossvorrichtung konstruktiv derart zu verbessern, dass mit ihr bei einer kostengünstigen Herstellung die Montierbarkeit erleichtert wird.

Diese Aufgabe ist erfindungsgemäss dadurch gelöst, dass bei der Einrichtung für die Halterung dieser Zug- und Stossvorrichtung ein kastenförmiges Distanzelement als Distanzüberbrückung vorgesehen ist, welches zusammen mit dem die Zugstange lagernden Stützelement einstückig gegossen hergestellt ist.

Mit dieser erfindungsgemässen Einrichtung kann eine optimale Montage bzw. Demontage der Zug- und Stossvorrichtung mit dem diesen haltenden Distanzelement erzielt werden, und durch diese einstückig gegossene Herstellung desselben zusammen mit dem Stützelement entsteht eine erhebliche Kostenreduktion der Einrichtung. Damit können die erforderlichen Festigkeitswerte dieses auf Zug bzw. Druck beanspruchten Distanzelementes ohne weiteres erfüllt werden.

Zweckmässigerweise weist dieses kastenförmig ausgebildete Distanzelement einen viereckigen Querschnitt auf und es ist zusammen mit dem Stützelement vorzugsweise aus einem Sphäroguss oder Stahlguss hergestellt.

Gegen die Vorderseite hin ist das Distanzelement mit Vorteil zumindest teilweise verjüngend ausgebildet und dieses nabenförmige Stützelement ist mit einer zentralen Bohrung für die Aufnahme der Zugstange versehen.

Anhand von Ausführungsbeispielen unter Bezugnahme auf die Zeichnung ist die Erfindung sowie weitere Vorteile derselben nachfolgend näher erläutert. Es zeigt:
- Fig. 1: einen Längsschnitt einer erfindungsgemässen Einrichtung für eine Halterung einer Zug- und Stossvorrichtung einer Kupplung in einer Fahrzeugausnehmung;
- Fig. 2: eine perspektivische Seitenansicht der Einrichtung nach Fig. 1; und
- Fig. 3: eine Stirnansicht der Einrichtung von der Rückseite.

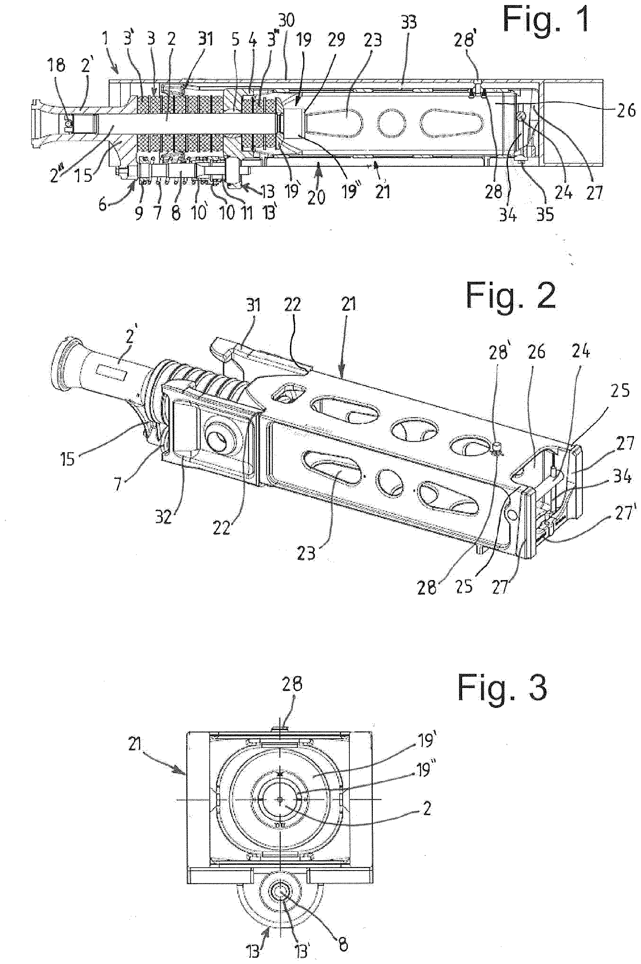

Fig. 1 und Fig. 2 zeigen eine Einrichtung 20 für eine Halterung einer Zug- und Stossvorrichtung einer Kupplung insbesondere eines Schienenfahrzeugs. Zudem ist noch eine Anlenkungseinrichtung 1 zum Ausrichten eines Kupplungskopfes, eines Kopfelementes oder ähnlichem vorgesehen.

Diese Einrichtung 20 eignet sich sehr vorteilhaft für Güterwagen, bei denen aussenseitig solche Fahrzeugausnehmungen 33 eines Fahrzeugkastens 30 vorgesehen sind, bei welchen jeweils eine Distanzüberbrückung erforderlich ist.

Für diese Distanzüberbrückung ist erfindungsgemäss ein Distanzelement 21 vorgesehen, welches auf seiner Vorderseite mit einem eine Zugstange 2 gelenkig lagernden Stützelement 4 verbunden und auf seiner Rückseite hinten in dieser Fahrzeugausnehmung 33 des Schienenfahrzeugs befestigbar ist. Das Distanzelement 21 ist dabei kastenförmig ausgebildet und zusammen mit dem die Zugstange 2 lagernden Stützelement 4 einstückig gegossen hergestellt.

Sehr vorteilhaft ist dieses kastenförmig ausgebildete Distanzelement 21 entlang seiner Längserstreckung mit einem viereckigen Querschnitt versehen und vorzugsweise aus einem Sphäroguss hergestellt. Es könnte auch aus einem Stahlguss oder ähnlichem gefertigt und sein Querschnitt könnte auch andersförmig ausgebildet sein.

Mit dieser Ausgestaltung des Distanzelementes 21 werden optimale Festigkeitswerte desselben auf Zug und Druck erzielt und es kann mit relativ dünnen Wandstärken vorzugsweise im Bereich von jeweils 5 bis 20 Millimetern bei Längen bis zu einem Meter dimensioniert sein.

Dieses Stützelement 4 ist mit einer zentralen Bohrung mit einem sphärisch ausgebildeten Drehgelenk 5 für die Aufnahme der Zugstange 2 versehen und zusätzlich durch eine seitlich vorstehende Nabe 13 für die Aufnahme eines Verbindungsarms 6 der Anlenkungseinrichtung 1 verlängert. Vor- und rückseitig des Stützelementes 4 sind jeweils mehrere auf der Zugstange 2 aufgestülpte scheibenförmige Federelemente 3 zum Dämpfen der im Betrieb des Schienenfahrzeugs entstehenden Zug- und Druckkräfte aneinandergereiht, zum Beispiel vorne sieben und hinten drei oder jeweils eine andere Anzahl. Diese auf Zugkraft wirkenden Federelemente 3" und ein am Ende der Zugstange 2 befestigter Anschlag 19 sind innerhalb des Distanzelementes 21 angeordnet. Der Anschlag 19 innerhalb des Distanzelementes 21 umfasst eine auf der Zugstange 2 aufschraubbare Mutter 19" mit einem Sicherungselement 29 und einen Druckteller 19', durch die ein Zusammendrücken der Federelemente 3 mit einer definierten Presskraft ermöglicht wird.

Das Distanzelement 21 ist auf seiner Rückseite mit einer solchen Eingangsöffnung 26 versehen, dass die Federelemente 3" und der Anschlag 19 in dieses einschiebbar sind. Zudem weist das Distanzelement 21 zumindest eine, vorzugsweise mehrere Öffnungen 23 bei allen vier Seiten auf, welche derart dimensioniert sind, dass die Mutter 19" des Anschlags 19 und die Federelemente 3" von ausserhalb des Distanzelementes 21 zum Montieren zugänglich sind, und dass diese Mutter 19" auch im montierten Zustand des Distanzelementes 21 an die Zugstange 2 befestigbar bzw. von dieser lösbar ist.

Des Weiteren ist das Distanzelement 21 durch Befestigungsmittel im Fahrzeugkasten 30 fixierbar, dazu zwischen beidseitig in letzterem angeordnete Backen 31, 32 und festspannbare Keile 27 hinten in der Fahrzeugausnehmung 33 des Fahrzeugkastens 30 vorgesehen sind. Das Distanzelement 21 ist beidseitig neben dem Stützelement 4 mit je einer mit der jeweiligen Backe 31, 32 korrespondierenden Anschlagfläche 22 ausgebildet, die sich quer zur Längsachse der Zugstange 2 entlang je einer Seitenfläche erstrecken.

Es sind zwei durch einen Verbindungsteil 27' gehaltene Keile 27 vorgesehen, die jeweils bei einem vorstehenden Steg 25 des Distanzelementes 21 mit einer Keilfläche in Kontakt stehen. Mittels vorzugsweise zwei Schraube 35 können die Keile 27 festgespannt werden. Zudem ist ein in Längsrichtung der Keile 27 angeordnetes Führungselement 34 zu deren Führung in einer im Distanzelement 21 lösbar befestigten queren Achse 24 geführt.

Mit diesen Befestigungsmitteln kann auf das Distanzelement 21 eine dauerhafte Druckkraft erzeugt werden, damit dieses auch bei regelmässig auftretenden Vibrationen verklemmt bleibt. Durch diese erzeugten linearen Kraftlinien dieser Befestigungsmittel vom jeweiligen Steg 25 durch jeweils eine Seitenwandung des Distanzelementes 21 zu der Anschlagfläche 22 entstehen auf dieses in optimaler Weise nur Druckkräfte. Selbstverständlich könnten diese Befestigungsmittel auch anders wie oben erläutert ausgestaltet sein, zum Beispiel als Schraubverbindung, nur durch einen Keil 27 oder dergleichen.

Ferner ist das Distanzelement 21 ausgehend von diesen Anschlagflächen 22 gegen die Vorderseite hin zumindest teilweise verjüngend ausgebildet, beispielsweise wie dargestellt auf beiden Seiten.

Zum Halten der Zugstange 2 in dieser Ebene und Rückführen derselben in eine relativ zum Fahrzeug zentrierte Ausgangslage ist ein parallel zur Zugstange 2 ausgerichteter Verbindungsarm 6 der Anlenkungseinrichtung 1 vorgesehen, welcher eine Führungsstange 8 und eine diese koaxial umgebende Druckfeder 7 aufweist. Die Führungsstange 8 ist an dem einen Ende an einem wegragenden Teil 15 eines Hülsenkörpers 2' bei der Zugstange 2 befestigt und am anderen Ende in der seitlich vorstehenden Nabe 13 im Stützelement 4 axial verschiebbar und schwenkbar gelagert. Der Hülsenkörper 2' und die Zugstange 2 sind ferner durch einen Zylinderstift 18 gegen Verdrehen gesichert.

Zweckmässigerweise ist die Druckfeder 7 an beiden Enden von je einer auf der Führungsstange 8 zentrierten Lagerbüchsen 9, 10 gehalten, wobei die eine Lagerbüchse 9 bei dem Teil 15 abgestützt ist. Die andere Lagerbüchse 10 ist als eine Führungshülse 10' für die Druckfeder 7 ausgebildet. Die Druckfeder 7 ist beidseitig derart abgestützt, dass sie einerseits via die Lagerbüchse 10 am Stützelement 4 und andererseits bei diesem Teil 15 durch die Lagerbüchse 9 an der Führungsstange 8 und einem dazwischenliegenden Ring für die Erzeugung einer stützenden Druckkraft angreift.

Zudem ist diese Druckfeder 7 durch ein Justiermittel in Achsrichtung gegenüber dem Stützelement 4 verstellbar, damit die Zugstange in ihrer Höhe ausgerichtet werden kann. Diesem Justiermittel ist vorzugsweise eine Gewindehülse 11 beim Stützelement 4 zugeordnet, auf welcher die Lagerbüchse 10 und damit die Druckfeder 7 schraubbar verstellt werden kann. Dadurch wird die Zugstange 2 um ein Drehgelenk 5 beim Stützelement 4 vorderseitig nach oben oder unten geschwenkt. Im Prinzip könnte dieses Justiermittel auch bei der Lagerbüchse 9 angeordnet bzw. anders ausgebildet sein.

Der Verbindungsarm 6 als Federspeicher ermöglicht, dass einerseits die Zugstange 2 im ungekuppelten Zustand in einer annähernd waagerechte Ebene und andererseits die Rückführung der Zugstange 2 in eine relativ zum Fahrzeug zentrischen Ausgangslage, indem er dieselbe mit dem Stützelement 4 derart koppelt, dass bei Auslenkungen der Zugstange 2 eine Druckkraft auf dieselbe erzeugt wird, die sie und den damit verbundenen Kupplungskopf in die zentrierte Ausgangslage zurückbringt. Letzteres erfolgt selbsttätig, weil die Auslenkbewegung der Zugstange automatisch die auf sie wirkende Federkraft des Verbindungsarmes aktiviert.

In der Nabe 13 des Stützelementes 4 ist ein mehrteiliges kugeliges Lager 13' mit einer flexiblen Gummibüchse als Drehgelenk für die Führungsstange 8 des Verbindungsarms 6 eingebaut. Damit wird insbesondere im gekuppelten Zustand diese gegenüberliegend in dem Teil 15 der Halterung 2' befestigte Führungsstange 8 bei einem Auslenken der Zugstange 2 um den vom Drehgelenk 5 gebildeten Schwenkpunkt um den beim Lager 13 gebildeten Schwenkpunkt geschwenkt.

Nach dem Entkuppeln bewirken einerseits die mit einer Vorspannung zusammengedrückten Federelemente 3 und massgeblich aber andererseits diese Druckfeder 7 der Anlenkeinrichtung 1, dass die Zugstange in Längsrichtung des Wagens sowohl horizontal als auch vertikal ausgerichtet wird und sich nicht leicht schräg nach unten neigt.

Gemäss Fig. 3 ist dieses Distanzelement 21 rückseitig offen ausgebildet und es ist seitlich bei diesem je ein vorstehender Steg 25 für seine Befestigung angeordnet. Auf der Oberseite ist noch ein Verstellmittel vorgesehen, welches dazu dient, dass die Ausrichtung des Distanzelementes 21 zum Fahrzeug eingestellt werden kann. Dieses kann als Variante durch einen Zapfen 28 und eine in diesem verstellbare Schraube 28' realisiert sein.

Die Erfindung ist mit dem oben erläuterten Ausführungsbeispiel ausreichend dargetan. Sie könnte aber noch durch weitere Varianten erläutert sein. Dieser Verbindungsarm 6 könnte auch weggelassen werden und das Stützelement 4 wäre dann ohne diese vorstehende Nabe 13 ausgebildet. Ebenso könnte das Distanzelement beispielsweise rohrförmig oder im Querschnitt rechteckförmig mit abgerundeten Ecken geformt sein.

## Patentansprüche

1. Einrichtung für eine Halterung einer Zug- und Stossvorrichtung einer Kupplung insbesondere eines Schienenfahrzeugs, mit einem kastenförmigen Distanzelement (21), welches auf der Vorderseite mit einem eine Zugstange (2) gelenkig lagernden Stützelement (4) verbunden ist, und zusammen mit dem die Zugstange (2) lagernden Stützelement (4) einstückig gegossen hergestellt ist, **dadurch gekennzeichnet, dass**
das kastenförmige Distanzelement (21) als Distanzüberbrückung vorgesehen ist, welches auf der Rückseite in einer Fahrzeugausnehmung (33) eines Fahrzeugkastens (30) des Schienenfahrzeugs befestigbar ist, wobei das durch Befestigungsmittel im Fahrzeugkasten (30) des Schienenfahrzeugs fixierbare Distanzelement (21) beidseitig neben dem Stützelement (4) mit je einer Anschlagfläche (22) und rückseitig mit wenigstens einer Keilfläche ausgebildet ist, wobei sich die jeweilige Anschlagfläche (22) quer zur Längsachse der Zugstange (2) entlang einer Seitenfläche erstreckt.

2. Einrichtung nach Anspruch 1, **dadurch gekennzeichnet, dass** dieses kastenförmig ausgebildete Distanzelement (21) entlang seiner Längserstreckung mit einem viereckigen Querschnitt versehen ist.

3. Einrichtung nach Anspruch 1 oder 2, **dadurch gekennzeichnet, dass**
das Distanzelement (21) gegen die Vorderseite hin zumindest teilweise verjüngend ausgebildet und dieses nabenförmige Stützelement (4) mit einer zentralen Bohrung für die Aufnahme der Zugstange (2) versehen ist.

4. Einrichtung nach einem der Ansprüche 1 bis 3, **dadurch gekennzeichnet, dass**
beidseitig des Stützelementes (4) jeweils mehrere Federelemente (3) zum Dämpfen der im Betrieb des Schienenfahrzeugs entstehenden Zug- und Druckkräfte aneinandergereiht sind, wobei die auf Zugkraft wirkenden Federelemente (3") und ein an der Zugstange (2) befestigter Anschlag (19) innerhalb des Distanzelementes (21) angeordnet sind

5. Einrichtung nach Anspruch 4, **dadurch gekennzeichnet, dass** der Anschlag (19) innerhalb des Distanzelementes (21) eine auf der Zugstange (2) aufschraubbare Mutter (19") mit einem Sicherungselement (29) und einen losen Druckteller (19') aufweist, durch die ein Zusammendrücken der Federelemente (3) mit einer definierten Presskraft ermöglicht wird.

6. Einrichtung nach Anspruch 4 oder 5, **dadurch gekennzeichnet, dass**
das Distanzelement (21) zumindest eine seitliche Öffnung (23) aufweist, welche derart dimensioniert ist, dass der Anschlag (19) von ausserhalb des Distanzelementes (21) zugänglich und an die Zugstange (2) befestigbar bzw. von dieser lösbar ist.

7. Einrichtung nach einem der Ansprüche 4 bis 6, **dadurch gekennzeichnet, dass**
das Distanzelement (21) auf seiner Rückseite offen ist, damit die Federelemente (3") und der Anschlag (19) in dieses einschiebbar bzw. aus diesem herausnehmbar sind.

8. Einrichtung nach einem der Ansprüche 1 bis 7, **dadurch gekennzeichnet, dass**
im Stützelement (4) ein die Zugstange (2) zum Auslenken derselben lagerndes Drehgelenk (5) integriert ist.

9. Einrichtung nach einem der Ansprüche 1 bis 8, **dadurch gekennzeichnet, dass**
das Stützelement (4) für die Aufnahme eines Verbindungsarms (6) durch eine seitlich vorstehende Nabe (13) verlängert ist, wobei mittels dem Verbindungsarm (6) mit einer Druckfeder (7) eine stützende Druckkraft auf die Zugstange (2) erzeugt und damit zumindest eine bestimmte zentrierende Höhenposition der Zugstange (2) und damit der Kupplung bewirkt wird.

10. Einrichtung nach Anspruch 9, **dadurch gekennzeichnet, dass** der vorzugsweise parallel zur Zugstange (2) ausgerichtete Verbindungsarm (6) mit der Druckfeder (7) zwischen dem Stützelement (4) und einem Hülsenkörper (2') der Zugstange (2) angeordnet ist.

11. Einrichtung nach einem der Ansprüche 1 bis 10, **dadurch gekennzeichnet, dass**
vorzugsweise auf der Oberseite des Distanzelementes (21) wenigstens ein Verstellmittel vorgesehen ist, welches dazu dient, dass die Ausrichtung des Distanzelementes (21) zum Fahrzeug einstellbar ist.

12. Einrichtung nach einem der Ansprüche 1 bis 11, **dadurch gekennzeichnet, dass**
das Distanzelement (21) aus einem Sphäroguss oder Stahlguss hergestellt ist.

## Claims

1. Device for holding a draw and buffing device of a coupling in particular of a rail vehicle, having a box-shaped spacer element (21), which is connected on the front side to a support element (4), which supports a drawbar (2) in an articulated manner, and is produced in one piece by casting together with the supporting element (4), which supports the drawbar (2), **characterized in that**
the box-shaped spacer element (21) is provided as a distance bridging means, which can be fastened on the rear side in a vehicle recess (33) of a vehicle body (30) of the rail vehicle, whereby the spacer element (21), which can be fixed by fastening means in the vehicle body (30) of the rail vehicle, being formed on both sides next to the support element (4) in each case with a stop face (22) and on the rear side with at least one wedge face, whereby the respective stop face (22) extending transversely with respect to the longitudinal axis of the drawbar (2) along a side face.

2. Device according to claim 1, **characterised in that**
said box-shaped spacer element (21) is provided with a quadrangular cross-section along its longitudinal extension.

3. Device according to claim 1 or 2, **characterised in that**
the spacer element (21) is at least partially tapered formed towards the front side and this hub-shaped support element (4) is provided with a central bore for receiving the drawbar (2).

4. Device according to one of the claims 1 to 3, **characterised in that** a plurality of spring elements (3) for damping the tensile and compressive forces arising during operation of the rail vehicle are arranged in series on both sides of the support element (4), wherein the spring elements (3") acting on tensile force and a stop (19) fastened to the drawbar (2) are arranged inside the spacer element (21).

5. Device according to claim 4, **characterised in that**
the stop (19) within the spacer element (21) has a nut (19"), which can be screwed onto the drawbar (2) and has a securing element (29) and a loose pressure plate (19'), by means of which the spring elements (3) can be pressed together with a defined pressing force.

6. Device according to claim 4 or 5, **characterised in that**
the spacer element (21) has at least one lateral opening (23), which is dimensioned in such a way that the stop (19) is accessible from outside the spacer element (21) and can be attached to or detached from the drawbar (2).

7. Device according to one of the claims 4 to 6, **characterised in that** the spacer element (21) is open on its rear side so that the spring elements (3") and the stop (19) can be pushed into this or removed from it.

8. Device according to one of the claims 1 to 7, **characterised in that** a swivel joint (5) is integrated in the support element (4) and supports the drawbar (2) for deflecting the latter.

9. Device according to one of the claims 1 to 8, **characterised in that** the support element (4) for receiving a connecting arm (6) is extended by a laterally projecting hub (13), wherein by means of the connecting arm (6) with a compression spring (7) a supporting pressure force is generated on the drawbar (2) and thus at least a certain centring height position of the drawbar (2) and thus of the coupling is effected.

10. Device according to claim 9, **characterised in that**
the connecting arm (6), which is preferably aligned parallel to the drawbar (2), is arranged with the compression spring (7) between the supporting element (4) and a sleeve body (2') of the drawbar (2).

11. Device according to one of the claims 1 to 10, **characterised in that** preferably on the upper side of the distance element (21) at least one adjusting means is provided, which serves to ensure that the alignment of the distance element (21) to the vehicle is adjustable.

12. Device according to one of the claims 1 to 11, **characterised in that** the spacer element (21) is made of a ductile iron or cast steel.

## Revendications

1. Dispositif de maintien d'un dispositif de traction et de choc d'un attelage, en particulier d'un véhicule ferroviaire, comprenant un élément (21) d'entretoisement en forme de caisson, qui est relié du côté avant à un élément (4) d'appui montant à articulation un tirant (2), et qui est fabriqué en étant coulé d'une seule pièce ensemble avec l'élément (4) d'appui montant le tirant (2),
**caractérisé en ce que**
l'élément (21) d'entretoisement en forme de caisson est prévu sous la forme d'un pontage d'entretoisement, qui, du côté arrière, peut être fixé dans un évidement (33) de véhicule d'une caisse (30) du véhicule ferroviaire, dans lequel l'élément (21) d'entretoisement, pouvant être fixé par des moyens de fixation dans la caisse (30) du véhicule ferroviaire, est constitué des deux côtés, outre de l'élément (4) d'appui, en ayant respectivement une surface (22) de butée et, du côté arrière, en ayant au moins une surface en coin, dans lequel la surface (22) respective de butée s'étend, le long d'une surface latérale, transversalement à l'axe longitudinal du tirant (2).

2. Dispositif suivant la revendication 1, **caractérisé en ce que**
l'élément (21) d'entretoisement, constitué sous la forme d'un caisson a, le long de son étendue longitudinale, une section transversale quadrangulaire.

3. Dispositif suivant la revendication 1 ou 2, **caractérisé en ce que**
l'élément (21) d'entretoisement se rétrécit au moins en partie vers le côté avant et cet élément (4) d'appui en forme de moyeu est pourvu d'un trou central de réception du tirant (2).

4. Dispositif suivant l'une des revendications 1 à 3, **caractérisé en ce que**
des deux côtés de l'élément (4) d'appui sont rangés les uns à côté des autres respectivement plusieurs éléments (3) de ressort, pour l'amortissement des forces de traction et de compression, se créant lorsque le véhicule ferroviaire est en fonctionnement, dans lequel les éléments (3'') de ressort, agissant sur la force de traction et une butée (19) fixée au tirant (2) sont disposés à l'intérieur de l'élément (21) d'entretoisement.

5. Dispositif suivant la revendication 4, **caractérisé en ce que**
la butée (19), à l'intérieur de l'élément (21) d'entretoisement, a un écrou (19"), qui peut se visser sur le tirant (2) et qui a un élément (29) de frein d'écrou et une collerette (19') mobile de pression, par laquelle il est possible de comprimer ensemble les éléments (3) de ressort à une force de pression définie.

6. Dispositif suivant la revendication 4 ou 5, **caractérisé en ce que**
l'élément (21) d'entretoisement a au moins une ouverture (23) latérale, qui a des dimensions telles que la butée (19) est accessible de l'extérieur de l'élément (21) d'entretoisement et peut être fixée au tirant (2) ou en être détachée.

7. Dispositif suivant l'une des revendications 4 à 6, **caractérisé en ce que**
l'élément (21) d'entretoisement est ouvert sur son côté arrière, afin que les éléments (3") de ressort et la butée (19) puissent y être insérés ou en être retirés.

8. Dispositif suivant l'une des revendications 1 à 7, **caractérisé en ce que**
dans l'élément (4) d'appui est intégrée une articulation (5) pivotante de montage du tirant (2), afin de le dévier.

9. Dispositif suivant l'une des revendications 1 à 8, **caractérisé en ce que**
l'élément (4) d'appui est, pour la réception d'un bras (6) de liaison, prolongé par un moyeu (13) en saillie latéralement, dans lequel au moyen du bras (6) de liaison, il est produit, par un ressort (7) de compression, une force de compression d'appui sur le tirant (2), et ainsi au moins une position en hauteur déterminée de centrage du tirant (2) et ainsi de l'attelage.

10. Dispositif suivant la revendication 9, **caractérisé en ce que**
le bras (6) de liaison, orienté de préférence parallèlement au tirant (2), est monté avec le ressort (7) de compression entre l'élément (4) d'appui et un corps (2') de manchon du tirant (2).

11. Dispositif suivant l'une des revendications 1 à 10, caractérisé en ce que'
il est prévu, de préférence, du côté supérieur de l'élément (21) d'entretoisement au moins un moyen de réglage, qui sert à pouvoir régler l'orientation de l'élément (21) d'entretoisement par rapport au véhicule.

12. Dispositif suivant l'une des revendications 1 à 11, **caractérisé en ce que**
l'élément (21) d'entretoisement est en fonte à graphite sphéroïdal ou en acier moulé.
